# EUROPÄISCHE PATENTSCHRIFT

(11) **EP 1 709 927 B1**
(45) Veröffentlichungstag und Bekanntmachung des Hinweises auf die Patenterteilung: **25.06.2008**
(21) Anmeldenummer: 06112188.5
(22) Anmeldetag: 04.04.2006
(51) Int. Cl.: A61C 1/00, A61C 17/02

(54) **Einrichtung zum Anschließen eines Fluidbehälters an ein Dentalgerät und Dentalgerät mit einer solchen Einrichtung.**
System for connecting a fluid reservoir to a dental apparatus and dental apparatus comprising such a system.
Système pour connecter un réservoir pour liquide à un appareil dentaire et appareil dentaire avec un tel système.

(30) Priorität: 04.04.2005 DE 102005015545
(43) Veröffentlichungstag der Anmeldung: 11.10.2006
(73) Patentinhaber: Sirona Dental Systems GmbH, 64625 Bensheim (DE)
(72) Erfinder: Weber, Jürgen, 64293 Darmstadt (DE); Oehme, Bernd, 55128 Mainz (DE)
(74) Vertreter: Sommer, Peter

(56) Entgegenhaltungen:
- EP-A- 0 427 944
- EP-A- 1 529 496
- US-A- 3 771 557
- US-A1- 2003 013 063

## Beschreibung

### Technisches Gebiet

Die vorliegende Erfindung betrifft ein Dentalgerät mit einem Fluidbehälter mit einer Saugleitung zum Absaugen eines Fluides aus dem Fluidbehälter, wobei die Saugleitung mit einer Saugpumpe des Dentalgerätes verbunden werden kann. Die vorliegende Erfindung betrifft ferner einen Fluidbehälter zur Verwendung mit einem solchen Dentalgerät.

### Stand der Technik

Aus dem Stand der Technik sind Einrichtungen bekannt, die dem Anschließen eines Fluidbehälters an ein Dentalgerät dienen. Bei den bekannten Einrichtungen bzw. Dentalgeräten wird das Fluid aus dem an der Einrichtung befestigten Fluidbehälter abgesaugt und einem Handgerät zugeführt, über welches das Fluid auf die zu behandelnde Stelle aufgebracht wird.

So ist beispielsweise in der DE 101 14 331 C1 eine Einrichtung an einem Dentalgerät zum Anschließen eines Fluidbehälters beschrieben. Die bekannte Einrichtung setzt sich im Wesentlichen aus einem Aufnahmeteil und einem Aufsatzstück zusammen. Während das Aufnahmeteil an dem Dentalgerät vorgesehen ist, ist das Aufsatzstück separat ausgebildet und kann auf den anzubringenden, geöffneten Fluidbehälter geschraubt werden. Das Aufsatzstück dient somit als Adapter. Das Aufsatzstück weist eine Belüftungsleitung und eine Saugleitung auf, die jeweils durch ein Rückschlagventil verschlossen sind. Die Rückschlagventile sind als Kugelventile ausgebildet, wobei die Kugeln durch Spiralfedern in den Ventilsitz gedrückt sind.

Wird bei dem bekannten System das Aufsatzstück in das Halteteil gesteckt, so drückt ein an dem Aufnahmeteil angeordneter Dorn gegen die Kugel des Rückschlagventiles in der Saugleitung und öffnet somit dieses Rückschlagventil, so dass mittels einer Saugpumpe im Dentalgerät das Fluid durch die Saugleitung aus dem Fluidbehälter abgesaugt werden kann. Der dadurch in dem Fluidbehälter entstehende Unterdruck bewirkt dabei eine Öffnung des Rückschlagventiles in der Belüftungsleitung, so dass Außenluft in den Fluidbehälter eingesaugt werden kann. Auf diese Weise kann das Fluid ohne größere Absaugleistung aus dem Fluidbehälter abgesaugt werden.

Das bekannte System hat den Nachteil, dass eine große Anzahl von Komponenten erforderlich ist und viel Bauraum benötigt wird.

Aus der US 3,771,557 A1 ist ein Flüssigkeitsbehälter einer Pumpstation einer durchspülten Zahnbürste bekannt, der ein als Rückschlagventil ausgebildetes Verbindungsstück zu der Pumpstation aufweist. Die Pumpstation weist zur Aufnahme des Flüssigkeitsbehälters eine Vertiefung auf, in der ein rohrförmiger Fortsatz angeordnet ist, welcher mit dem Rückschlagventil des Flüssigkeitsbehälters so zusammenwirkt, dass beim Einschieben des Flüssigkeitsbehälters das Rückschlagventil geöffnet wird. Es ist keine Entlüftung des Behälters vorgesehen.

Der vorliegenden Erfindung liegt somit u.a. die Aufgabe zugrunde, ein Dentalgerät zum Anschließen eines Fluidbehälters auszubilden, das eine geringere Anzahl von Komponenten und einen kompakten Aufbau hat, wobei ein sicheres Öffnen und Verschließen des anzubringenden Fluidbehälters möglich sein soll. Ferner liegt der Erfindung die Aufgabe zugrunde, einen Fluidbehälter zur Verwendung mit einem solchen Dentalgerät zu schaffen.

### Darstellung der Erfindung

Die Lösung der vorgenannten Aufgabe erfolgt anhand der Merkmale des Patentanspruches 1. Vorteilhafte Ausführungsformen der Erfindung sind Gegenstand der Unteransprüche.

Das erfindungsgemäße Dentalgerät weist eine Belüftungsleitung zum Belüften eines anschließbaren Fluidbehälters und eine Saugleitung zum Absaugen des Fluides aus dem Fluidbehälter auf. Die Belüftungsleitung kann beispielsweise in die Umgebungsluft münden oder auch über eine am Dentalgerät vorgesehene Luftleitung mit Luft versorgt werden. Die Saugleitung kann mit einer Saugpumpe des Dentalgerätes verbunden werden. Um das Anschließen eines Fluidbehälters zu vereinfachen, ist ein Aufnahmeteil vorgesehen, das eine Vertiefung zur Aufnahme des Fluidbehälters aufweist. Das erste Rohr und das zweite Rohr sind in der Vertiefung angeordnet.Weiterhin ist ein erstes hervorstehendes Rohr vorgesehen, das von einem zweiten hervorstehenden Rohr umgeben ist, wobei das erste Rohr zusammen mit dem zweiten Rohr in eine Öffnung in den Fluidbehälter eingeführt werden kann. Die Saugleitung kann nun zum einen in dem ersten Rohr ausgebildet sein, während die Belüftungsleitung zwischen dem ersten Rohr und dem zweiten Rohr ausgebildet ist. Zum anderen kann die Saugleitung auch zwischen dem ersten Rohr und dem zweiten Rohr ausgebildet sein, während die Belüftungsleitung in dem ersten Rohr ausgebildet ist. So können die Rohre beispielsweise einen kreisrunden Querschnitt aufweisen, wobei das zweite Rohr einen größeren Innen- und Außendurchmesser aufweist, so dass die Belüftungsleitung bzw. die Saugleitung in einem Ringraum zwischen dem ersten und dem zweiten Rohr und der Saugleitung bzw. Belüftungsleitung innerhalb des ersten Rohres ausgebildet ist.

Durch die erfindungsgemäße Anordnung von Belüftungs- und Saugleitung wird ein besonders kompakter Aufbau des Dentalgeräts erzielt.

In einer bevorzugten Ausführungsform der vorliegenden Erfindung weist die Saugleitung eine Saugöffnung und die Belüftungsleitung eine Belüftungsöffnung auf, die dem anzuschließenden Fluidbehälter zugewandt sind. Im Gebrauchszustand, also in dem Zustand, in dem der Fluidbehälter an das Dentalgerät angeschlossen ist, ist die Saugöffnung oder die Belüftungsöffnung tiefer in dem Fluidbehälter angeordnet als die Belüftungsöffnung oder die Saugöffnung. Welche der beiden Varianten zu bevorzugen ist, hängt dabei von der Orientierung des anzuschließenden Fluidbehälters ab. Soll dieser mit der Öffnung nach oben angeschlossen werden, so ist eine tiefer im Behälterinneren angeordnete Saugöffnung zu bevorzugen, während bei einem mit der Öffnung nach unten anzuschließenden Fluidbehälter eine tiefer im Behälterinneren angeordnete Belüftungsöffnung bevorzugt ist. Eine derartige Anordnung der Belüftungs- und Saugöffnung bewirkt, dass die durch die Belüftungsöffnung einströmende Luft nicht bzw. nur schwer in die Saugöffnung gelangt.

Gemäß einer weiteren bevorzugten Ausführungsform des erfindungsgemäßen Dentalgeräts ist die Belüftungsleitung stirnseitig verschlossen, wobei die Belüftungsöffnung zu der Seite des Belüftungsrohres weist. Bei dieser Ausführungsform ist es somit möglich, nicht die zuvor beschriebene Anordnung der Belüftungsöffnung bzw. Saugöffnung zu wählen, da die durch die Belüftungsöffnung eindringende Luft zu den Seiten geleitet wird, so dass die Luftblasen nicht in den Bereich der Saugöffnung gelangen.

In einer weiteren bevorzugten Ausführungsform der Erfindung sind mehrere Belüftungsöffnungen vorgesehen. Auf diese Weise kann die eindringende Luft zu mehreren Seiten der Belüftungsleitung geleitet werden.

Um die Verletzungsgefahr des Bedienungspersonals zu verringern, sind bei einer bevorzugten Ausführungsform der Erfindung das erste Rohr und das zweite Rohr unterhalb des Randes der Vertiefung zur Aufnahme des Fluidbehälters angeordnet. Ein Anstoßen des Bedienungspersonals an dem hervorstehenden ersten und zweiten Rohr ist somit weitgehend ausgeschlossen.

In einer weiteren bevorzugten Ausführungsform des erfindungsgemäßen Dentalgeräts ist in der Belüftungsleitung ein einrichtungsseitiges Rückschlagventil vorgesehen, das ein Eindringen von Luft durch die Belüftungsleitung in den Fluidbehälter ermöglicht und ein Ausfließen des Fluides durch die Belüftungsleitung aus dem Fluidbehälter verhindert.

Als Rückschlagventil kommen grundsätzlich alle bekannten Rückschlagventile in Frage, allerdings ist die nachstehende Ausführungsform aus Gründen der Platzersparnis und des geringen konstruktiven Aufwandes zu bevorzugen. Bei dieser bevorzugten Ausführungsform der Erfindung wird das einrichtungsseitige Rückschlagventil von einer ringförmigen, elastischen Dichtscheibe gebildet, die in dem zweiten Rohr befestigt und gegen das erste Rohr vorgespannt ist. Bei dieser Ausführungsform ist die Belüftungsleitung demzufolge zwischen dem ersten und dem zweiten Rohr ausgebildet.

Das erfindungsgemäße Dentalgerät weist eine Einrichtung zum Anschließen eines Fluidbehälters gemäß der vorangegangenen Beschreibung auf und es ist ferner eine Saugpumpe vorgesehen, die mit der Saugleitung des Dentalgeräts in Verbindung steht. Bezüglich der weiteren Ausgestaltung des erfindungsgemäßen Dentalgerätes kann beispielsweise auf die aus dem Stand der Technik bekannten Dentalgeräte verwiesen werden, die ebenfalls ein Fluid zur Behandlung des Patienten einsetzen.

Der zur Verwendung mit dem Dentalgerät vorgesehene Fluidbehälter weist eine Öffnung, einen an der Öffnung angeordneten Dichtring und ein zwischen dem Behälterinneren und dem Dichtring angeordnetes behälterseitiges Rückschlagventil auf. Das behälterseitige Rückschlagventil kann dabei eine durchstechbare Membran sein. So kann diese Membran beispielweise eine Gummimembran sein, die sich nach dem Durchstechen in den Fluidbehälter wölbt und somit gegen das zweite Rohr vorgespannt ist. Um das Anschließen des Fluidbehälters an dem Dentalgerät zu vereinfachen, kann der Fluidbehälter in einen Vorsprung im Bereich der Öffnung aufweisen, der in die Vertiefung der Einrichtung eingesteckt werden kann. Ein solcher Vorsprung kann beispielsweise ein Flaschenhals sein, wenn der Fluidbehälter flaschenförmig ausgebildet ist.

Der Fluidbehälter kann bei dem Anschließvorgang von einer ersten Position, in der der Dichtring dichtend an dem zweiten Rohr anliegt und keine Strömungsverbindung zwischen dem Behälterinneren und der Saugleitung besteht, in eine zweite Position verschoben werden, in der der Dichtring dichtend an dem zweiten Rohr anliegt und sich die Saugleitung durch das Rückschlagventil erstreckt, so dass eine Strömungsverbindung zwischen dem Behälterinneren und der Saugleitung besteht. Auf diese Weise ist ein sicheres Anschließen des Fluidbehälters möglich, bei dem kein Fluid nach außen tritt. Ferner ist hierdurch ein sicheres Abnehmen des Fluidbehälters ohne nach außen austretendes Fluid möglich. In einer bevorzugten Ausführungsform des Fluidbehälters kann in der zweiten Position auch eine Strömungsverbindung zwischen der Belüftungsleitung und dem Behälterinneren bestehen.

In einer Ausführung des Fluidbehälters weist die Membran eine Wölbung in Richtung des Behälterinneren auf. Auf diese Weise ist eine Dichtigkeit des Rückschlagventiles in besonders hohem Maße gewährleistet.

Ferner kann der Vorsprung einen außen umlaufenden Zentrier- und Haltering aufweisen, der eine stabilere Halterung des Fluidbehälters in der Vertiefung der Einrichtung ermöglicht.

Um eine lösbare, jedoch feste Verbindung zwischen dem Fluidbehälter und der Einrichtung erzielen zu können, kann der Vorsprung in einer besonders bevorzugten Ausführungsform der Erfindung einrastend in die Vertiefung der Einrichtung eingesteckt werden. Auf diese Weise ist auch ein Anbringen des Fluidbehälters mit nach oben weisender Öffnung möglich. Die Rastfunktion kann von gängigen Rastmitteln ausgeübt werden.

### Kurzbeschreibung der Zeichnungen

- Fig.1: zeigt eine teilweise Seitenansicht des erfindungsgemäßen Dentalgeräts, an die der Fluidbehälter angeschlossen ist, in geschnittener Darstellung,
- Fig. 2: zeigt ein erfindungsgemäßes Dentalgerät mit zwei Fluidbehältern und
- Fig. 3: einen Fluidbehälter als Teil des Dentalgeräts.

### Ausführungsbeispiel der Erfindung

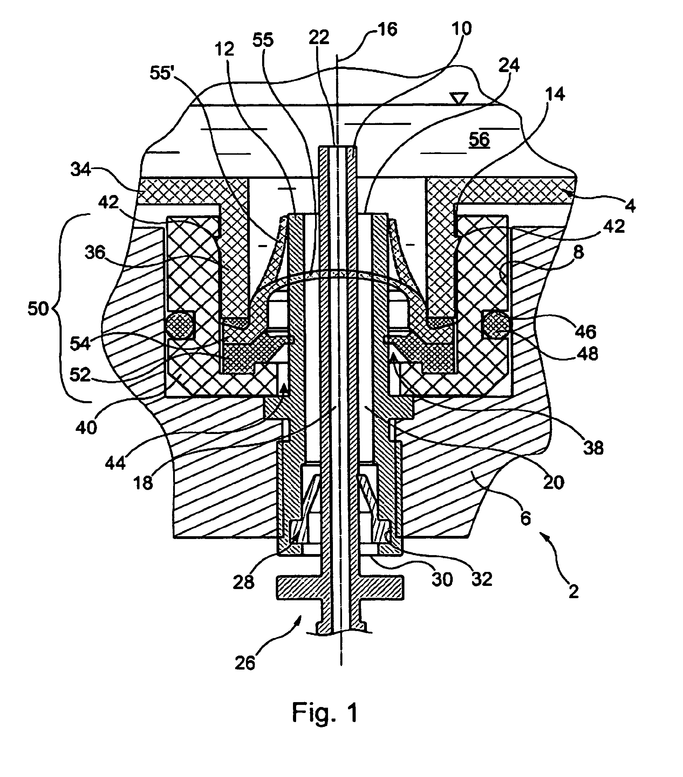

**Fig. 1** zeigt eine Ausführungsform der erfindungsgemäßen Anordnung, die eine Einrichtung 2 zum Anschließen eines Fluidbehälters 4, den Fluidbehälter 4 und ein in Fig. 1 nicht näher dargestelltes Dentalgerät umfasst, wobei die Einrichtung 2 an dem Dentalgerät angeordnet oder ein Teil des Dentalgerätes ist.

Die Einrichtung 2 weist ein Aufnahmeteil 6 auf, das beispielsweise an dem Dentalgerät angeordnet werden kann oder als Teil des Dentalgerätes ausgebildet ist. In dem Aufnahmeteil 6 ist eine Vertiefung 8 vorgesehen, die in der dargestellten Ausführungsform zylindrisch ausgebildet ist. Die Vertiefung 8 weist nach außen, um den Fluidbehälter 4 in der Vertiefung 8 aufnehmen bzw. an der Einrichtung 2 anschließen zu können.

Durch das Aufnahmeteil 6 erstreckt sich ein erstes Rohr 10 und ein zweites Rohr 12 derart, dass sowohl das erste Rohr 10 als auch das zweite Rohr 12 in der Vertiefung 8 angeordnet sind. Vorteilhafterweise sind das erste Rohr 10 und das zweite Rohr 12 unterhalb des Randes der Vertiefung 8 angeordnet, der in der Figur mit dem Bezugszeichen 14 versehen ist, wobei diese Anordnung lediglich aus Übersichtlichkeitsgründen in der Figur nicht ausgeführt ist. Das erste Rohr 10, das zweite Rohr 12 und die zylindrische Vertiefung 8 sind bezüglich der Längsachse 16 des ersten Rohres 10 koaxial angeordnet.

Sowohl des erste als auch das zweite Rohr 10, 12 sind im Querschnitt kreisrund ausgebildet, wobei das zweite Rohr 12 einen größeren Innen- und Außendurchmesser aufweist. Das zweite Rohr 12 ist fest mit dem Aufnahmeteil 6 verbunden und umgibt das erste Rohr 10, das sich durch das zweite Rohr 12 erstreckt. In dem ersten Rohr 10 ist eine Saugleitung 18 zum Absaugen von Fluid aus dem Fluidbehälter 4 ausgebildet, während der zwischen dem ersten Rohr 10 und dem zweiten Rohr 12 ausgebildete Ringraum als Belüftungsleitung 20 zum Belüften des Fluidbehälters 4 fungiert. Die Saugleitung 18 weist eine dem Fluidbehälter 4 zugewandte Saugöffnung 22 auf, während die Belüftungsleitung 20 eine Belüftungsöffnung 24 aufweist, die ebenfalls dem Fluidbehälter 4 zugewandt ist. Vorteilhafterweise weist die Belüftungsöffnung 24 zu der Seite der Belüftungsleitung 20. So können beispielsweise auch mehrere zur Seite weisende Belüftungsöffnungen vorgesehen sein, während das zweite Rohr 12 stirnseitig, also im Bereich der dargestellten Belüftungsöffnung 24, verschlossen ist. Die Saugleitung 18 kann an ihrem der Saugöffnung 22 abgewandten Ende 26 mit einer nicht dargestellten Saugpumpe des Dentalgerätes verbunden sein bzw. werden.

In der gezeigten Ausführungsform ist die Saugöffnung 22 im Gebrauchszustand, also mit angeschlossenem Fluidbehälter 4, tiefer in dem Fluidbehälter 4 angeordnet als die Belüftungsöffnung 24. Dies macht die gezeigte Einrichtung 2 insbesondere für den Anwendungsfall besonders brauchbar, bei dem der Fluidbehälter 4 mit einer nach oben weisenden Öffnung angeschlossen werden soll. Dieser Anwendungsfall ist beispielsweise gezeigt, wenn die Figur um 180° gedreht würde.

In der Belüftungsleitung 20 ist ferner ein einrichtungsseitiges Rückschlagventil 28 vorgesehen. Das Rückschlagventil 28 ermöglicht zum einen ein Hindurchströmen von Luft ausgehend von der der Belüftungsöffnung 24 abgewandten Öffnung 30 der Belüftungsleitung 20 hin zu der Belüftungsöffnung 24, so dass Luft von außen durch die Öffnung 30 und über die Belüftungsleitung 20 und die Belüftungsöffnung 24 in den Fluidbehälter 4 einströmen kann, sobald im Fluidbehälter 4 ein Unterdruck entsteht. Zu diesem Zweck ist die Öffnung 30 der Umgebung zugewandt. Zum anderen verhindert das einrichtungsseitige Rückschlagventil 28 ein Ausfließen des Fluides aus dem Fluidbehälter 4 über die Belüftungsleitung 20.

In der dargestellten Ausführungsform der Einrichtung 2 ist das einrichtungsseitige Rückschlagventil 28 von einer ringförmigen, elastischen Dichtscheibe gebildet, die in dem zweiten Rohr 12 in einer entsprechenden umlaufenden Nut 32 sicher befestigt und gegen das erste Rohr 10 vorgespannt ist, wobei die Dichtscheibe zu der Längsachse 16 kegelartig geneigt ist.

Der Fluidbehälter 4 weist einen Fluidbehälterkörper 34 auf, der einen einstückig damit verbundenen Fluidbehälterhals 36 umfasst, an dessen Ende eine Öffnung 38 des Fluidbehälters 4 vorgesehen ist. Auf dem Fluidbehälterhals 36 ist ein Deckel 40 angeordnet, der mittels Rastelementen 42 mit dem Fluidbehälterhals 36 verbunden ist. Der Deckel 40 weist seinerseits eine der Öffnung 38 zugewandte Aussparung 44 auf, so dass der Deckel 40 des Fluidbehälters 4 alleine die Öffnung 38 des Fluidbehälters 4 nicht zu verschließen vermag. Der Deckel 40 weist ferner eine außen umlaufende Nut 46 auf, in der ein Zentrier- und Haltering 48 angeordnet ist. Zusammen mit dem Fluidbehälterhals 36 bildet der Deckel 40 einen Vorsprung 50 des Fluidbehälters 4 aus, der in die Vertiefung 8 des Aufnahmeteiles 6 eingesteckt werden kann. Vorzugsweise sind weitere Rastelemente an dem Deckel 40 bzw. in der Vertiefung 8 vorgesehen, so dass der Vorsprung 50 einrastend in die Vertiefung 8 gesteckt werden kann, wobei auf deren Darstellung aus Übersichtlichkeitsgründen verzichtet wurde.

Der Fluidbehälter 4 weist ferner einen der Aussparung 44 zugewandten Dichtring 52 auf, an den sich ein der Öffnung 38 zugewandtes behälterseitiges Rückschlagventil 54 anschließt. Der Innendurchmesser des Dichtringes 52 ist derart gewählt, dass er eng und dichtend an dem zweiten Rohr 12 anliegt, sofern dieses in die Öffnung 38 eingeführt wird. Der Dichtring 52 dient zum Abstreifen des Fluids 56 und verhindert, beispielsweise beim Abnehmen des Fluidbehälters 4, dass das Fluid 56 in das Aufnahmeteil 6 tropft.

Das behälterseitige Rückschlagventil 54 ist von einer elastisch durchstechbaren Membran 55 gebildet, die in nicht angebautem Zustand des Behälters in Richtung des Behälterinneren gewölbt ist. Der äußere Rand des Dichtrings 52 und des membranartigen Rückschlagventiles 54 ist zwischen dem Rand der Aussparung 44 einerseits und dem Rand der Öffnung 38 andererseits verklemmt, so dass Dichtring 52 und Rückschlagventil 54 sicher an dem Fluidbehälter 4 befestigt sind.

Nachfolgend wird die Vorgehensweise beim Anschließen des Fluidbehälters 4 beschrieben. Das Anschließen erfolgt durch Einstecken des Vorsprunges 50 des Fluidbehälters 4 in die Vertiefung 8 des Aufnahmeteiles 6, so dass das erste Rohr 10 zusammen mit dem zweiten Rohr 12 durch die Aussparung 44 in die Öffnung 38 eingeführt wird. So gelangt der Fluidbehälter 4 zunächst in eine erste Position, in der der Dichtring 52 dichtend an der Außenseite des zweiten Rohres 12 anliegt, während das erste wie auch das zweite Rohr 10, 12 das membranartige Rückschlagventil 54 noch nicht durchstochen haben. In dieser ersten Position besteht also noch keine Strömungsverbindung zwischen der Saugleitung 18 und dem Behälterinneren. Hierdurch ist noch vor dem Durchstechen der Membran 55 eine hohe Dichtigkeit gewährleistet, so dass ein Ausfließen des Fluides in die Umgebung verhindert wird. Durch Fortführung des Steckvorganges gelangt der Vorsprung 50 in seine in der Figur dargestellte zweite Position, in der der Dichtring 52 weiterhin dichtend an der Au-ßenseite des zweiten Rohres 12 anliegt, wobei das membranartige Rückschlagventil 54 im Bereich der Membran 54 bereits von dem ersten und zweiten Rohr 10, 12 durchstochen ist, so dass eine Strömungsverbindung zwischen dem Behälterinneren und der Saugleitung 18 sowie der Belüftungsleitung 20 besteht. Die geöffnete Membran 55' liegt in diesem Zustand an der Außenwand des Rohrs 12 an.

Der Außendurchmesser des Vorsprunges 50 entspricht im Wesentlichen dem Innendurchmesser der Vertiefung 8, so dass der Fluidbehälter 4 sicher angeschlossen werden kann, wobei der Zentrier- und Haltering 48 an der Außenseite des Deckels 40 eine Ausrichtung und eine Halterung des Deckels 40 in der Vertiefung 8 bewirkt. Beim Abnehmen des Fluidbehälters 4 wird umgekehrt vorgegangen, wobei die genannten Vorteile entsprechend gelten.

Nachfolgend wird die Funktionsweise der dargestellten Ausführungsform beschrieben. Im dargestellten Gebrauchszustand, d.h. mit angeschlossenem Fluidbehälter 4, kann nun über eine nicht dargestellte Saugpumpe Fluid 56 aus dem Fluidbehälter 4 abgesaugt werden. Das Fluid 56 gelangt dabei durch die Saugöffnung 22 in die Saugleitung 18 bis zu deren Ende 26, von wo Sie über weitere Leitungen einem entsprechenden Instrument des Dentalgerätes zugeführt werden kann (nicht dargestellt). Indem jedoch Fluid 56 aus dem Fluidbehälter 4 gesaugt wird, entsteht ein Unterdruck in dem Fluidbehälter 4. Auf Grund dieses Unterdrucks öffnet sich das einrichtungsseitige Rückschlagventil 28, indem sich die Dichtscheibe aufweitet, so dass über die Öffnung 30, die Belüftungsleitung 20 und die Belüftungsöffnung 24 Außenluft in das Behälterinnere gelangen kann.

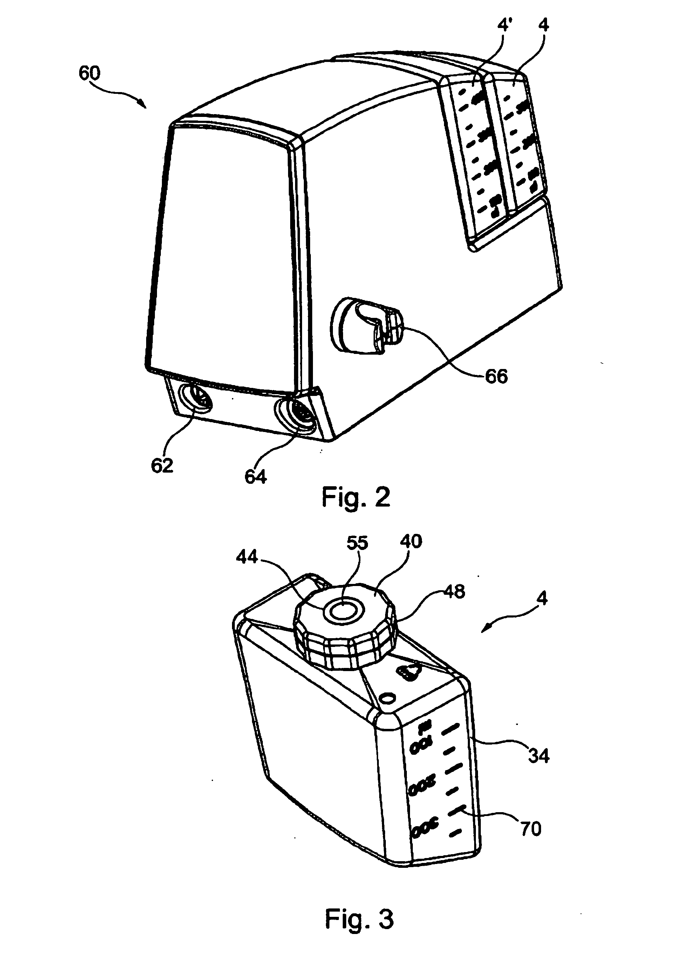

**Fig. 2** zeigt ein erfindungsgemäßes Dentalgerät 60 mit zwei hintereinander angeordneten Fluidbehältern 4, 4'. Das Dentalgerät 60 weist an seiner Forderseite zwei Anschlüsse 62, 64 zum Anschluss je eines Handgerätes mittels eines Schlauchs auf. Weiterhin ist eine Haltevorrichtung 66 zur Halterung des Handstücks vorgesehen. Das Dentalgerät 60 kann weitere Bedienelemente enthalten, die in Fig. 2 nicht dargestellt sind.

Die Fluidbehälter 4, 4' sind im rückwärtigen Teil des Dentalgeräts 60 angeordnet, wozu im Gehäuse des Dentalgeräts 60 eine Ausnehmung vorgesehen ist. Die Konturen des Dentalgeräts 60 sowie der Fluidbehälter 4, 4' sind so gestaltet, dass bei eingesetzten Fluidbehältern 4, 4' eine Fortsetzung der Konturen des Dentalgeräts 60 gebildet ist.

**Fig. 3** zeigt den Fluidbehälter 4 in einer gedrehten dreidimensionalen Darstellung. Der Fluidbehälter 4 weist den Deckel 40 sowie den Fluidbehälterkörper 34 auf, auf welchem eine Skala 70 angebracht ist, um den Fluidstand im Fluidbehälterkörper 34 ablesen zu können. Der Deckel 40 ist entlang seiner Außenkontur mit dem Zentrier- und Haltering 48 versehen und weist die Aussparung 44 mit der innenliegenden Membran 55 auf.

## Patentansprüche

1. Dentalgerät mit einer Saugleitung (18) zum Absaugen eines Fluides (56) aus einem anschließbaren Fluidbehälter (4, 4'), die mit einer Saugpumpe des Dentalgerätes verbindbar ist, wobei ein Aufnahmeteil (6) vorgesehen ist, das eine Vertiefung (8) zur Aufnahme des Fluidbehälters (4, 4') aufweist, **dadurch gekennzeichnet, dass** eine Belüftungsleitung (20) zum Belüften des Fluidbehälters (4, 4') und dass ein erstes hervorstehendes Rohr (10) vorgesehen ist, das von einem zweiten hervorstehenden Rohr (12) umgeben ist, und dass das erste Rohr (10) zusammen mit dem zweiten Rohr (12) in eine Öffnung in dem Fluidbehälter einführbar ist, wobei die Saugleitung (18) in dem ersten Rohr (10) und die Belüftungsleitung (20) zwischen dem ersten Rohr (10) und dem zweiten Rohr (12) oder die Saugleitung zwischen dem ersten Rohr (10) und dem zweiten Rohr (12) und die Belüftungsleitung in dem ersten Rohr (10)ausgebildet ist, wobei das erste Rohr (10) und das zweite Rohr (12) in der Vertiefung (8) angeordnet sind.

2. Dentalgerät nach Anspruch 1, **dadurch gekennzeichnet, dass** die Saugleitung (18) eine Saugöffnung (22) und die Belüftungsleitung (20) eine Belüftungsöffnung (24) aufweist, die dem Fluidbehälter (4, 4') zugewandt sind, wobei die Saugöffnung (22) oder die Belüftungsöffnung (24) im Gebrauchszustand tiefer in dem Fluidbehälter (4, 4') angeordnet ist als die Belüftungsöffnung (24) oder die Saugöffnung.

3. Dentalgerät nach Anspruch 1, **dadurch gekennzeichnet, dass** die Belüftungsleitung (20) stirnseitig verschlossen ist, wobei die Belüftungsöffnung (24) zu der Seite des Belüftungsrohres (12) weist.

4. Dentalgerät nach Anspruch 3, **dadurch gekennzeichnet, dass** mehrere Belüftungsöffnungen vorgesehen sind.

5. Dentalgerät nach einem der Ansprüche 1 bis 4, **dadurch gekennzeichnet, dass** das erste Rohr (10) und das zweite Rohr (12) unterhalb des Randes (14) der Vertiefung (8) zur Aufnahme des Fluidbehälters (4, 4') angeordnet sind.

6. Dentalgerät nach einem der Ansprüche 1 bis 5, **dadurch gekennzeichnet, dass** in der Belüftungsleitung (20) ein einrichtungsseitiges Rückschlagventil (28) vorgesehen ist, dass ein Eindringen von Luft durch die Belüftungsleitung (20) in den Fluidbehälter (4, 4') ermöglicht und ein Ausfließen des Fluides (56) durch die Belüftungsleitung (20) aus dem Fluidbehälter verhindert.

7. Dentalgerät nach Anspruch 6, **dadurch gekennzeichnet, dass** das einrichtungsseitige Rückschlagventil (28) eine ringförmige, elastische Dichtscheibe ist, die in dem zweiten Rohr (12) befestigt ist und gegen das erste Rohr (10) vorgespannt ist.

8. Dentalgerät nach einem der Ansprüche 1 bis 7, mit einem Fluidbehälter mit einer Öffnung (38), einem an der Öffnung (38) angeordneten Dichtring (52) und einem zwischen dem Behälterinneren und dem Dichtring (52) angeordneten behälterseitigen Rückschlagventil (54), wobei der Fluidbehälter (4, 4') von einer ersten Position, in der der Dichtring (52) dichtend an dem zweiten Rohr (12) anliegt und keine Strömungsverbindung zwischen dem Behälterinneren und der Saugleitung besteht, in eine zweite Position verschiebbar ist, in der der Dichtring (52) dichtend an dem zweiten Rohr (12) anliegt und sich die Saugleitung durch das Rückschlagventil erstreckt, so dass eine Strömungsverbindung zwischen dem Behälterinneren und der Saugleitung besteht.

9. Dentalgerät nach Anspruch 8, **dadurch gekennzeichnet, dass** in der zweiten Position auch eine Strömungsverbindung zwischen der Belüftungsleitung und dem Behälterinneren besteht.

10. Dentalgerät nach einem der Ansprüche 8 oder 9, **dadurch gekennzeichnet, dass** das behälterseitige Rückschlagventil (54) eine durchstechbare Membran ist.

11. Dentalgerät nach Anspruch 10, **dadurch gekennzeichnet, dass** die Membran (54) eine Wölbung in Richtung des Behälterinneren aufweist.

12. Dentalgerät nach einem der Ansprüche 8 bis 11, **dadurch gekennzeichnet, dass** ein Vorsprung (50) im Bereich der Öffnung (38) des Fluidbehälters vorgesehen ist, der in die Vertiefung (8) des Dentalgeräts einsteckbar ist und einen außen umlaufenden Zentrier- und Haltering (48) aufweist.

13. Dentalgerät nach Anspruch 12, **dadurch gekennzeichnet, dass** der Vorsprung (50) einrastend in die Vertiefung (8) einsteckbar ist.

## Claims

1. A dental appliance having a suction duct (18) for sucking a fluid (56) from a dockable fluid container (4, 4'), which suction duct is adapted to be connected to the suction pump of said dental appliance, in which a receptacle (6) is provided which has a seating (8) for the accommodation of said fluid container (4, 4'), **characterized in that** a breather duct (20) is provided for venting said fluid container (4, 4') and that a first protruding tube (10) is provided which is surrounded by a second protruding tube (12), and that said first tube (10) can be inserted, together with said second tube (12), through an opening in said fluid container, and said suction duct (18) is formed in said first tube (10) and said breather duct (20) is formed between said first tube (10) and said second tube (12) or said suction duct is formed between said first tube (10) and said second tube (12) and said breather duct is formed in said first tube (10), and said first tube (10) and said second tube (12) are located in said seating (8).

2. The dental appliance according to claim 1, **characterized in that** said suction duct (18) has a suction opening (22) and said breather duct (20) has a breather opening (24), which openings open into said fluid container (4, 4'), and, in state of use, said suction opening (22) or said breather opening (24) is located at a lower point in the fluid container (4, 4') than said breather opening (24) or said suction (22) opening, respectively.

3. The dental appliance according to claim 1, **characterized in that** said breather duct (20) is closed at its end, and said breather opening (24) is situated toward the side of the breather tube (12).

4. The dental appliance according to claim 3, **characterized in that** a plurality of breather openings is provided.

5. The dental appliance according to any one of claims 1 to 4, **characterized in that** said first tube (10) and said second tube (12) are disposed below the edge (14) of said seating (8) for accommodating said fluid container (4, 4').

6. The dental appliance according to any one of claims 1 to 5, **characterized in that** an appliance-proximal check valve (28) is provided in said breather duct (20), which check valve allows for the passage of air through said breather duct (20) into said fluid container (4, 4') and prevents outflow of fluid (56) from said fluid container through said breather duct (20).

7. The dental appliance according to claim 6, **characterized in that** said appliance-proximal check valve (28) is an annular, resilient gasket, which is fixed inside said second tube (12) and is biased against said first tube (10).

8. The dental appliance according to any one of claims 1 to 7, having a fluid container with an opening (38), a packing ring (52) located around said opening (38) and a container-proximal check valve (54) disposed between the interior of said container and said packing ring (52), and said fluid container (4, 4') can be switched from a first position in which said packing ring (52) sealingly bears against said second tube (12) and there is no hydraulic communication between the interior of said container and said suction duct, to a second position in which said packing ring (52) sealingly bears against said second tube (12) and said suction duct extends through said check valve so that there is hydraulic communication between the interior of said container and said suction duct.

9. The dental appliance according to claim 8, **characterized in that** in said second position there is also hydraulic communication between said breather duct and the interior of said container.

10. The dental appliance according to any one of claims 8 or 9, **characterized in that** said container-proximal check valve (54) is a piercable diaphragm.

11. The dental appliance according to claim 10, **characterized in that** said diaphragm (54) is convex on its side facing the interior of said container.

12. The dental appliance according to any one of claims 8 to 11, **characterized in that** a projection (50) is provided in the vicinity of said opening (38) in said fluid container and is adapted to be pushed into said seating (8) of the dental appliance and has a peripheral centering and locking ring (48).

13. The dental appliance according to claim 12, **characterized in that** said projection (50) can be pushed into said seating (8) with a locking action.

## Revendications

1. Appareil à usage dentaire comportant une conduite d'aspiration (18), qui est destinée à aspirer un fluide (56) hors d'un réservoir de fluide (4, 4'), apte à être raccordé, et qui peut être reliée à une pompe d'aspiration de l'appareil à usage dentaire, un élément de réception (6) étant prévu, lequel comporte un creux (8) destiné à recevoir le réservoir de fluide (4, 4'), **caractérisé en ce qu'**il est prévu une conduite d'aération (20) pour l'aération du réservoir de fluide (4, 4') et **en ce qu'**il est prévu un premier tube (10) saillant, qui est entouré par une deuxième tube (12) saillant, et **en ce que** le premier tube (10), conjointement avec le deuxième tube (12), est introduit dans une ouverture dans le réservoir de fluide, la conduite d'aspiration (18) étant réalisée dans le premier tube (10), et la conduite d'aération (20) étant réalisée entre le premier tube (10) et le deuxième tube (12) ou la conduite d'aspiration étant réalisée entre le premier tube (10) et le deuxième tube (12), et la conduite d'aération étant réalisée dans le premier tube (10), le premier tube (10) et le deuxième tube (12) étant disposés dans le creux (8).

2. Appareil à usage dentaire selon la revendication 1, **caractérisé en ce que** la conduite d'aspiration (18) comporte une ouverture d'aspiration (22), et la conduite d'aération (20) comporte une ouverture d'aération (24), lesquelles sont orientées vers le réservoir de fluide (4, 4'), l'ouverture d'aspiration (22) ou l'ouverture d'aération (24) étant disposée, en position d'utilisation, plus bas dans le réservoir de fluide (4, 4') que l'ouverture d'aération (24) ou l'ouverture d'aspiration.

3. Appareil à usage dentaire selon la revendication 1, **caractérisé en ce que** la conduite d'aération (20) est fermée du côté frontal, l'ouverture d'aération (24) étant dirigée vers le côté du tube d'aération (12).

4. Appareil à usage dentaire selon la revendication 3, **caractérisé en ce que** plusieurs ouvertures d'aération sont prévues.

5. Appareil à usage dentaire selon l'une quelconque des revendications 1 à 4, **caractérisé en ce que** le premier tube (10) et le deuxième tube (12) sont disposés en dessous du bord (14) du creux (8) pour la réception du réservoir de fluide (4, 4').

6. Appareil à usage dentaire selon l'une quelconque des revendications 1 à 5, **caractérisé en ce que** dans la conduite d'aération (20) est prévu un clapet de non-retour (28) du côté de l'appareil, qui permet une pénétration d'air dans le réservoir de fluide (4, 4') à travers la conduite d'aération (20) et qui empêche une évacuation du fluide (56) hors du réservoir de fluide à travers la conduite d'aération (20).

7. Appareil à usage dentaire selon la revendication 6, **caractérisé en ce que** le clapet de non-retour (28) du côté de l'appareil est un disque d'étanchéité élastique annulaire, qui est fixé dans le deuxième tube (12) et est précontraint contre le premier tube (10).

8. Appareil à usage dentaire selon l'une quelconque des revendications 1 à 7, comportant un réservoir de fluide avec une ouverture (38), une bague d'étanchéité (52), agencée au niveau de l'ouverture (38), et un clapet de non-retour (54) du côté du réservoir, agencé entre l'intérieur du réservoir et la bague d'étanchéité (52), le réservoir de fluide (4, 4') pouvant être déplacé d'une première position, dans laquelle la bague d'étanchéité (52) est en appui étanche contre le deuxième tube (12) et aucune liaison de flux n'est établie entre l'intérieur du réservoir et la conduite d'aspiration, dans une deuxième position, dans laquelle la bague d'étanchéité (52) est en appui étanche contre le deuxième tube (12) et la conduite d'aspiration passe par le clapet de non-retour, de telle sorte qu'une liaison de flux est établie entre l'intérieur du réservoir et la conduite d'aspiration.

9. Appareil à usage dentaire selon la revendication 8, **caractérisé en ce que** dans la deuxième position, il existe également une liaison de flux entre la conduite d'aération et l'intérieur du réservoir.

10. Appareil à usage dentaire selon la revendication 8 ou 9, **caractérisé en ce que** le clapet de non-retour (54) du côté du réservoir est une membrane pouvant être transpercée.

11. Appareil à usage dentaire selon la revendication 10, **caractérisé en ce que** la membrane (54) comporte un bombement vers l'intérieur du réservoir.

12. Appareil à usage dentaire selon l'une quelconque des revendications 8 à 11, **caractérisé en ce que** dans la zone de l'ouverture (38) du réservoir de fluide est prévue une saillie (50), qui peut être enfichée dans le creux (8) de l'appareil à usage dentaire et comporte une bague de centrage et de fixation (48) extérieure périphérique.

13. Appareil à usage dentaire selon la revendication 12, **caractérisé en ce que** la saillie (50) peut être enfichée de manière bloquée dans le creux (8).
